**Europäisches Patentamt**

**European Patent Office**

**Office européen des brevets**

(19)

(11) Numéro de publication: **0 064 015**
**B1**

(12) **FASCICULE DE BREVET EUROPEEN**

(45) Date de publication du fascicule du brevet:
10.10.84

(51) Int. Cl.³: **G 03 B 27/32**

(21) Numéro de dépôt: 82420051.3

(22) Date de dépôt: 08.04.82

(54) **Dispositif automatique pour le tirage et le développement simultanés de photographies.**

(30) Priorité: 15.04.81 FR 8107737

(43) Date de publication de la demande:
03.11.82 Bulletin 82/44

(45) Mention de la délivrance du brevet:
10.10.84 Bulletin 84/41

(84) Etats contractants désignés:
BE CH DE GB IT LI NL SE

(56) Documents cités:
EP - A - 0 011 850
EP - A - 0 028 148
BE - A - 842 062
CH - A - 156 148
FR - A - 1 138 876
FR - A - 1 545 315
US - A - 2 552 250
US - A - 4 185 912

(73) Titulaire: **Kis France Société Anonyme Société dite:,
47 Avenue Marie Reynoard, F-38100 Grenoble (FR)**

(72) Inventeur: **Thebault, Claude, 19, avenue du Vercors,
F-38240 Meylan (FR)**

(74) Mandataire: **Laurent, Michel et al, 20 rue Louis Chirpaz
Boite Postale 32, F-69130 Lyon-Ecully (FR)**

BUNDESDRUCKEREI BERLIN

## Description

L'invention concerne un dispositif automatique intégré pour le tirage et le développement simultanés, éventuellement au coup par coup, de photographies, notamment en couleur.

Le plus généralement, le tirage, le développement et la découpe des photographies s'effectuent en phases distinctes et séparées, ce qui nécessite des opérations multiples et entraîne des délais substantiels.

De la sorte, actuellement, il n'est guère possible économiquement de tirer et de développer simultanément des photos à la demande et ce, dans un délai court et éventuellement au coup par coup.

On connait déjà des dispositifs automatiques pour le tirage et le développement simultanés de photographies (voir brevets européens 0 011 850 et 0 028 148, brevet belge 842 062 et brevet américain 4 185 912). Mais ces solutions essentiellement adaptées au traitement des photographies noir et blanc, sont complexes, volumineuses et peu satisfaisantes sur le plan industriel pour le développement des photos en couleur.

Pour l'essentiel, ces appareils automatiques comprennent trois ensembles principaux à savoir:

- un premier ensemble dit d'exposition comprenant la lampe, le système filtrant, le cadre destiné à recevoir le film à reproduire, l'objectif d'agrandissement et un diaphragme;
- un deuxième ensemble en chambre noire, comprenant le papier sensible, l'organe d'avancement du papier, un plan où se projette l'image à reproduire issue de l'objectif et un ciseau;
- un troisième ensemble dit de développement comprenant une succession de bains de développement et des moyens pour faire avancer le papier insolé dans ce bain.

L'appareil décrit dans le brevet belge 842 062, voire dans le brevet européen 0 011 850, comporte un boitier unique dans lequel l'ensemble d'exposition est vertical et vient se loger sur un bâti horizontal comprenant en série l'ensemble en chambre noire et l'ensemble de développement. Du fait du boitier unique, le changement de la cartouche de papier sensible ou le changement de l'ensemble d'exposition est toujours délicat et ne peut se faire sans interrompre le processus de développement. En outre, ce boitier est encore volumineux et encombrant en hauteur. De la sorte, ces appareils, adaptés au noir et blanc, manquent de versatilité et de souplesse pour le traitement des photographies en couleur.

L'invention pallie à ces inconvénients.

Elle concerne un dispositif intégré automatique pour le tirage et le développement immédiats et simultans et à la demande de photographies, notamment en couleur, qui soit polyvalent et versatile, c'est-à-dire qui puisse traiter indifféremment toutes sortes de pellicules, de dimensions très variées et sous des formes de présentations différentes, sans qu'il soit utile de trier ces pellicules ou de faire appel à des spécialistes.

Ce dispositif automatique intégré, pour le tirage et le développement simultanés de photographies, notamment en couleur, du type comprenant:

- un premier ensemble A dit »d'exposition« constitué par une lampe d'exposition proprement dite, un système filtrant soustractif, un cadre destiné à recevoir le film à reproduire, l'objectif d'agrandissement et un diaphragme;
- un deuxième ensemble B, en chambre noire, comprenant un organe d'alimentation en papier sensible, un organe d'avancement dudit papier sensible, un plan où se projette sur le papier l'image à reproduire issue de l'objectif, un ciseau;
- un troisième ensemble C dit »de développement« comprenant:
  - des moyens d'amenée de la feuille de papier insolée découpée,
  - une succession de bains de développement et une section de sèchage,
  - et des moyens destinés à faire avancer la feuille insolée découpée dans ces différentes sections de traitement et dans la section de sèchage,

se caractérise en ce que l'ensemble B possède sur une face verticale des moyens embrochables qui s'emboitent de façon démontable sur des moyens embrochables situés sur une extrémité de l'ensemble A et possède sur sa face du dessous des moyens s'adaptant de façon démontable avec des moyens situés sur le dessus de l'ensemble C de façon à pouvoir détacher l'ensemble A ou l'ensemble B sans interrompre le processus de développement ce qui permet de changer respectivement le format du film à reproduire ou l'organe d'alimentation du papier sensible.

La manière dont l'invention peut être réalisée et les avantages qui en découlent ressortiront mieux de l'exemple de réalisation qui suit donné à titre indicatif et non limitatif, à l'appui des figures annexées.

Pour la commodité de l'exposé, on détaillera chacun des trois ensembles caractéristiques de l'invention.

La figure 1 est une représentation schématique sommaire d'un dispositif automatique de tirage et de développement intégré conforme à l'invention.

La figure 2 est une représentation en coupe du premier ensemble A dit d'»d'exposition« et du second B en chambre noire perpendiculaire au premier.

La figure 3 est une vue en coupe montrant l'ajustement du premier ensemble A sur le second B.

Les figures 4 et 5 montrent le système débiteur de papier, c'est-à-dire l'organe d'avancement du papier sensible respectivement:

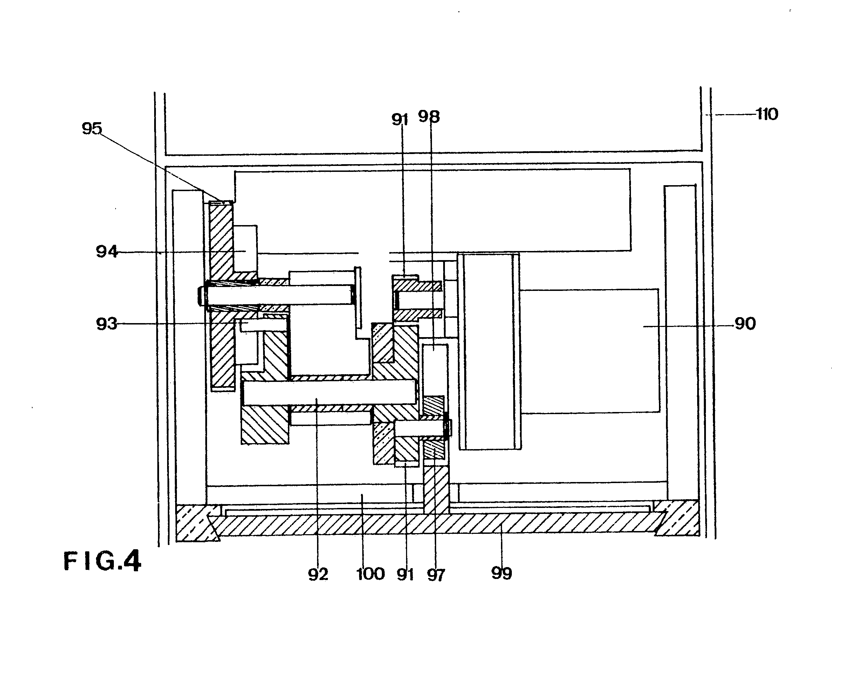

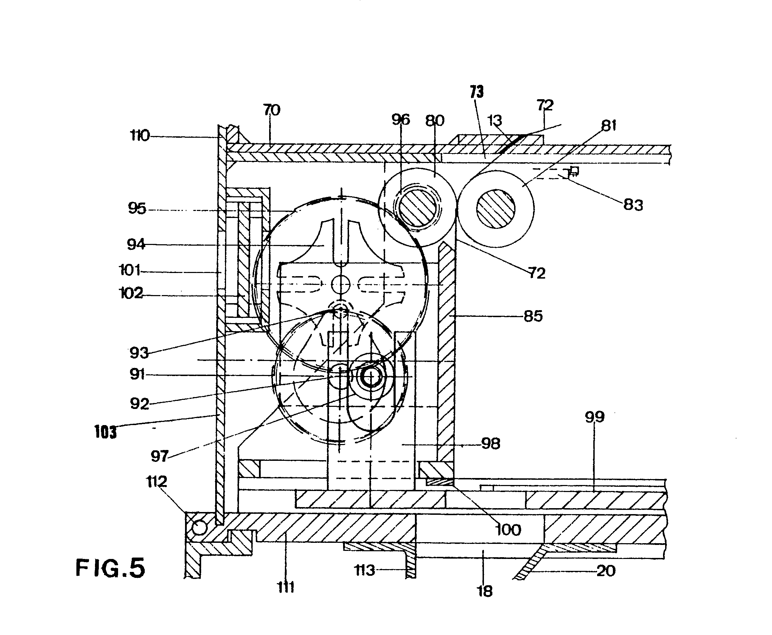

— en coupe selon l'axe du moteur (figure 4),
— en vue de côté (figure 5).

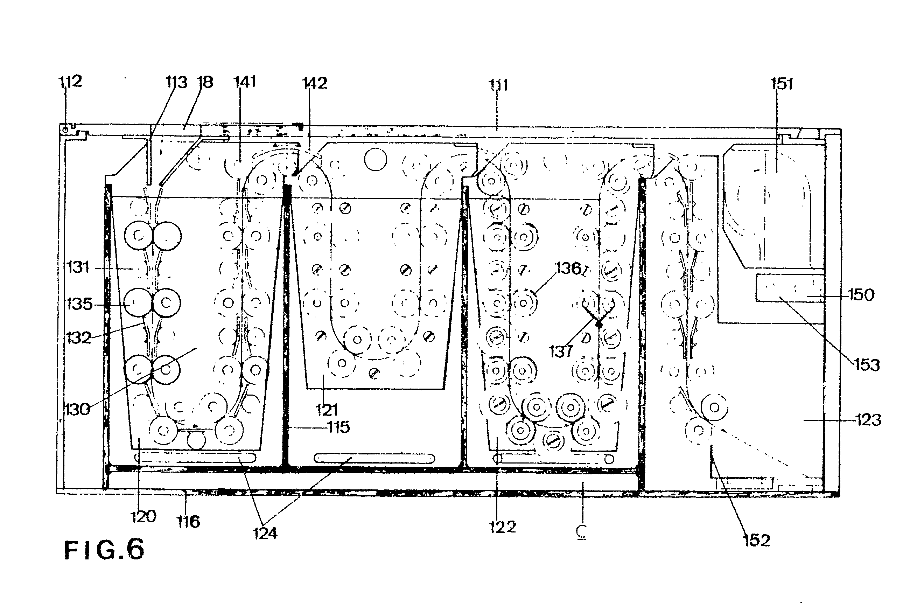

La figure 6 montre en coupe longitudinale et transversale le troisième ensemble C dit »de développement« parallèle au premier A et perpendiculaire au second B.

Pour la commodité du dessin, sur la figure 6, le bac (120) est une coupe de l'ensemble (130) en son milieu, alors que le bac (121) de cet ensemble est une vue de l'extérieur et enfin le bac (122) montre le système d'entraînement.

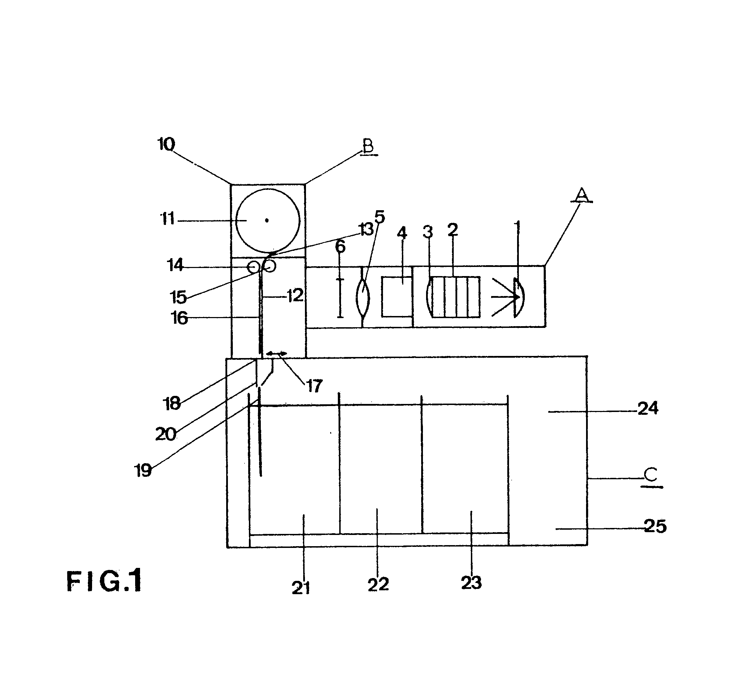

En se référant à la figure 1, le dispositif de tirage-développement intégré automatique de l'invention se compose:

— d'un premier ensemble horizontal A, dit »d'exposition«, comprenant:
    — la lampe d'exposition proprement dite (1),
    — un filtre soustractif (2), formé par trois filtres élémentaires complémentaires ajustables,
    — un diffuseur (3) associé au filtre soustractif (2),
    — un cadre (4) destiné à recevoir le film à tirer,
    — un objectif d'agrandissement (5),
    — un diaphragme obturateur (6);
— d'un second ensemble vertical B, en chambre noire, perpendiculaire au premier ensemble A, comprenant:
    — une cartouche étanche à la lumière (10), contenant une bobine (11) rotative de papier sensible (12) qui sort de la cartouche par une fente (13) garnie de feutre, afin d'assurer l'étanchéité à la lumière,
    — un organe d'avancement dudit papier (12), formé par deux rouleaux moteurs en pression (14—15),
    — une plaque (16) où se projette l'image à reproduire issue de l'objectif (5),
    — un ciseau horizontal (17) à guillotine, formant ciseau avec une partie fixe placée au bas de la plaque (16),
    — un orifice (18) d'où s'échappe la feuille insolée découpée (19),
:   d'un troisième ensemble horizontal C, dit »de développement«, situé sous B, perpendiculaire à celui-ci, mais parallèle à A, comprenant:
    — un entonnoir (20) placé juste sous l'orifice (18),
    — trois bacs de traitement contenant respectivement l'agent révélateur (21), l'agent de blanchiment-fixage (22) et de lavage (23),
    — une section dite de séchage (24),
    — un réceptacle (25) destiné à recevoir la photo terminée,
    — des moyens connus (voir par exemple brevet français 1 545 315), non illustrés ici, mais représentés en détail à la figure 6, destinés à faire avancer la feuille insolée découpée (19) dans les différentes sections de traitement (21—24).

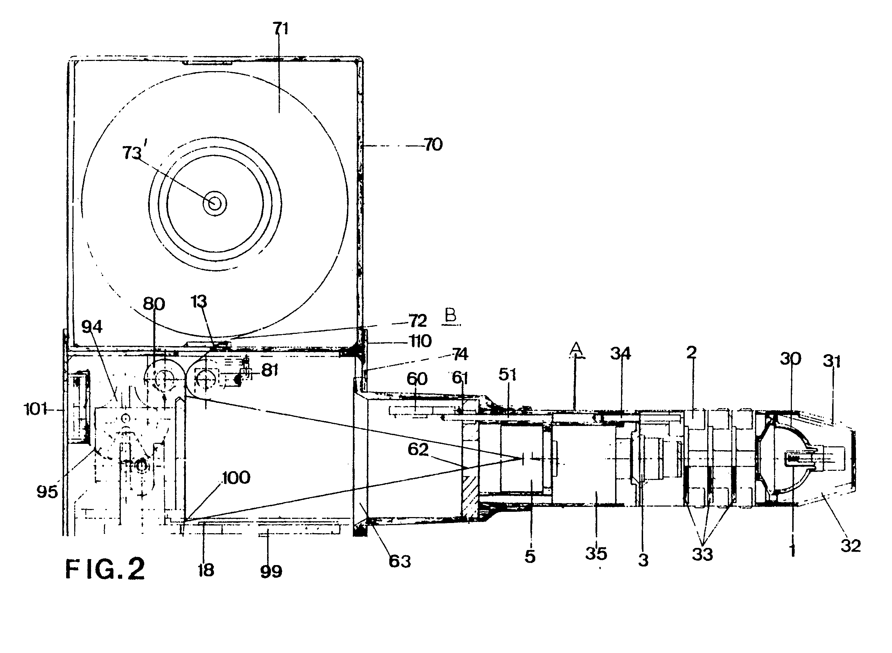

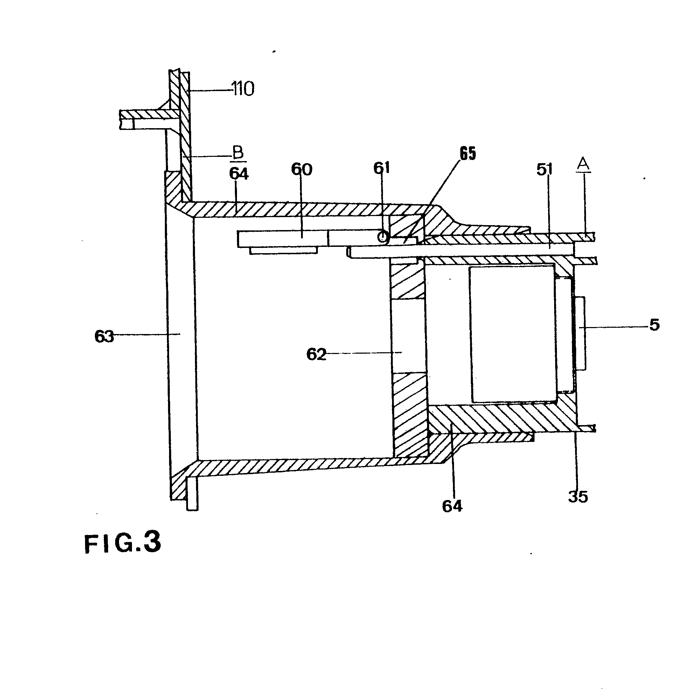

## L'ensemble d'exposition A (figures 2 et 3)

Cet ensemble horizontal A se compose plus particulièrement (voir figures 2 et 3)

— d'un premier ensemble formé d'une lampe proprement dite (30—1), par exemple du type quartz-halogène Sylvania 100 watts, recouverte d'un capot (31) en aluminium, dans lequel sont ménagées des fentes d'aération (32);
— et d'un ensemble filtrant (2), formé de trois filtres élémentaires soustractifs (33) plus particulièrement décrit dans la demande de brevet français de la Demanderesse du 3 Avril 1981 n° 81 06 900 ayant pour titre »Filtre soustractif pour le tirage de film photographique en couleur«; cet ensemble filtrant (2) associé au diffuseur (3) comporte en aval des broches (34), par exemple au nombre de deux, permettant de le solidariser au dispositif passu-vue (4) et d'amener le courant électrique d'alimentation à la lampe (1—30);
— le second formé d'un dispositif passe-vue (35), c'est-à-dire un dispositif placé à la suite du diffuseur (3), destiné à positionner le film négatif à reproduire; en pratique, afin de supprimer les réglages, on associe ce passe-vue (35) avec l'ensemble optique d'agrandissement: objectif (5) + diaphragme (6); de la sorte, plutôt que de régler la position respective de l'objectif et du film négatif en fonction des dimensions de celui-ci, on utilise essentiellement trois sous-ensembles brochables correspondant aux principales dimensions des films négatifs, soit:

— format 135: c'est-à-dire 24 × 36
— format 126: c'est-à-dire 28 × 28
— format 110: c'est-à-dire 13 × 17

Ce deuxième sous-ensemble (35) présente des broches traversantes (51) qui forment d'une part en aval des broches proprement dites permettant de fixer le passe-vue (35) sur l'ensemble en chambre noire B et d'autre part, permettent d'assurer le passage du courant électrique (voir figure 3) en formant à l'extrémité amont des fiches femelles pour les broches (34) du premier sous-ensemble. En aval, ces broches mâles (51) s'engagent dans des orifices conducteurs (65) prévus à cet effet à l'extrémité (64) de l'ensemble vertical B.

L'objectif (5) est calculé spécialement pour l'agrandissement choisi. Il est associé de manière classique à un diaphragme (6) non représenté aux figures 2 et 3.

L'ensemble B formant chambre noire (figures 2, 3 et 5)

Ce deuxième ensemble vertical B perpendiculaire au premier ensemble A, se compose tout d'abord:

— d'un boîtier (70), étanche à la lumière, par exemple en matière plastique moulée, contenant une bobine (71) de papier sensible (72) autour de son axe (73'). La feuille sensible (72) sort du boîtier (70) par une fente appropriée (13) recouverte sur ses deux lèvres d'un tissu de velours, afin de bien assurer l'étanchéité du boitier (70) à la lumière; une forme de réalisation avantageuse de l'ensemble boîtier (70) — bobine (71) est décrite dans la demande de brevet français de la Demanderesse du 3 Avril 1981 nº 81 06 901 ayant pour titre »Emballage pour bobine de papier sensible pour tirage photographique«;
— ensuite d'un bâti (74) disposé sous le boîtier (70) présentant:
    — sur le dessus des rebords (100) destinés à caler le boîtier (70) et une fente (73) coïncidant avec la fente (13) pour le passage du papier (72),
    — sur le dessous, un crifice (18) coïncidant avec un entonnoir (113—20) placé sur le dessus de l'ensemble horizontal de développement C, pour le passage de la feuille de papier insolée (19) coupée,
    — sur le côté, en direction de l'ensemble d'exposition A, une protubérance en forme de nez (64) où viendra s'embrocher (51) l'ensemble d'exposition A, et dans laquelle est placé le volet obturateur (60) pivotable (61).

La feuille (72) issue du boîtier (70) passe par la fente (13) puis par la fente (73) ménagée dans le haut du bâti (74) coïncidant avec la fente (13), puis est ensuite prise par l'organe d'avancement et de découpe du papier (72) placé en chambre noire (voir figure 5) qui se compose essentiellement (voir figures 2, 4 et 5):

— de deux rouleaux caoutchoutés (80) et (81), dont la circonférence correspond à la longueur de papier à débiter; ces deux rouleaux (80) et (81) sont maintenus en pression l'un contre l'autre par un ressort classique (83); le rouleau (81) est débrayable par un moyen connu, afin de faciliter l'introduction de la feuille de papier (72);
— dans l'axe de l'entraxe vertical de ces deux rouleaux (80—81), d'une plaque d'appui (85), par exemple en acier ou en aluminium, pour le papier sensible (72) au niveau de laquelle vient se projeter l'image issue de l'objectif (5); le papier (72) est donc, en cours d'exposition, plaqué contre cet appui (85);
— d'un moteur motoréducteur (90), dont l'arbre moteur horizontal entraîne en rotation une transmission à pignons (91) qui (voir figures 4 et 5):
    — d'une part, entraîne en rotation un arbre horizontal (92) qui porte un manetton (93) parallèle à (92), qui engrène une croix de Malte (94) à quatre branches, perpendiculaire au manetton (93); cette croix de Malte (94) est solidaire d'une pignon (95) qui engrène sur un autre pignon (96) porté par l'arbre du rouleau moteur de pression (80); on entraîne ainsi l'avancement du papier sensible (72);
    — d'autre part, porte un galet (97) qui entraîne une fourchette en U (98) solidaire du couteau mobile (99), qui coopère avec le couteau fixe (100) positionné à l'extrémité de la plaque d'appui (85) pour former un ciseau.

Lorsque le moteur (90) tourne, il entraîne en rotation le manetton (93) qui, par voie de conséquence, fait pivoter la croix de Malte (94). Comme le diamètre du pignon (95) est quatre fois plus grand que celui du pignon (96) du rouleau moteur (80), lorsque la croix de Malte (94) fait un quart de tour (déplacement d'une branche à l'autre), le rouleau moteur (80) fait un tour et débite donc la longueur prédéterminée de papier sensible (72).

Pour un cycle, c'est-à-dire pour un tour de l'arbre (92) du moteur (90) (voir figures 4 et 5):

4

— tout d'abord le manetton (93) s'engage dans la rainure de la croix de Malte (94), fait ainsi pivoter cette croix de Malte d'un quart de tour; par multiplication, cette croix de Malte fait tourner le pignon (80), donc fait avancer le papier (72) d'une longueur prédéterminée correspondant à la périphérie des débiteurs (80);

— pendant le même temps, le galet (97) décrit un cercle et entraîne donc ainsi la fourchette (98) en coulisssant dans le U solidaire du couteau mobile (99) dans un mouvement horizontal de va-et-vient.

En d'autres termes, pour un tour du moteur (90), on a:

— pendant le premier quart de tour l'avancement du papier (72),

— alors que pendant l'ensemble de ce tour, on a le mouvement de va-et-vient du couteau mobile (99).

Pour éviter que l'extrémité du papier coupé par le couteau (99) reste collé momentanément sur ce couteau (99), on oblige ce couteau (99) à effectuer une surcourse destinée justement à détacher ce papier découpé.

L'ensemble B comprend en outre (voir figure 5):

— une prise d'air (101) destinée à créer une ventilation à l'intérieur de la zone d'exposition et à éviter les condensations; cette prise d'air (101) est associée à une plaque (102) formant chicane, destinée à éviter l'entrée de la lumière;

— un orifice (18), disposé à l'aplomb du couteau fixe (100).

Comme déjà dit, un volet obturateur (60) pivotable en (61) permet d'assurer l'étanchéité à la lumière de la chambre noire B lorsque l'on enlève le porte-vue (35), c'est-à-dire soit l'ensemble d'exposition, soit simplement le sous-ensemble porte-vue (voir figure 3).

Le faisceau lumineux issu de la source de lumière (1) traverse l'objectif (5), puis un orifice (62) solidaire de B pour pénétrer par l'ouverture (63) dans l'ensemble vertical en chambre noire proprement dit. La référence (64) désigne l'avancée en forme d'un nez du bâti (74) où vient s'emboîter l'ensemble horizontal A d'exposition grâce aux broches (51) dans les orifices (65) prévus à cet effet dans la plaque (62) (voir fig. 3).

## L'ensemble C de développement (figure 6)

Cet ensemble horizontal C de développement parallèle à l'ensemble A d'exposition et situé sous celui-ci, se compose d'un boîtier (116) en tôle ou en matière plastique moulée, recouvert par un couvercle (111) articulé à une extrémité en (112) pour faciliter l'accès aux différents bacs de traitement. Sur ce couvercle (111), juste en-dessous de la plaque d'appui (85) et du couteau (100), est ménagé un entonnoir (113—20) destiné à récupérer et à assurer le passage de la feuille insolée coupée (19) par le couteau mobile (99—17). Les parois verticales (103) du bâti (74) de l'ensemble B sont solidaires du couvercle (111).

Le boîtier (116) comporte essentiellement de manière connue quatre bacs (120, 121, 122, 123) séparés par des parois (115) pour recevoir respectivement l'agent révélateur, l'agent de blanchiment et de fixage, l'eau de lavage et la section de sècherie.

Les trois premiers bacs (120), (121), (122) sont régulés en température par une résistance électrique appropriée (124). Chaque bac est séparé de son suivant par une cloison (115) et présente un ensemble (130) qui porte les rouleaux d'entraînement de la feuille de papier insolée coupée (19) à développer. Cet ensemble (130) est maintenu par des entretoises (131) qui portent des guides de convergence (132) pour la feuille de papier (19). Des rouleaux moteur caoutchoutés (135) commandés par des engrenages (136) et maintenus en pression par un ressort (137) font avancer la feuille dans le bac de traitement concerné. Un moteur (140) entraîne les engrenages (136). En haut de chaque bac, un train de rouleaux (141) sert à essorer la feuille traitée et une plaque recourbée (142) sert de guide pour permettre le passage de la feuille d'un bac au bac suivant.

La section sècherie (123) comprend essentiellement:

— une résistance électrique (150) associée à des ailettes de diffusion de la chaleur (153),

— et un ventilateur (151) que aspire l'air en haut du bac (123), le propulse sur la résistance (150), puis le pousse vers le bas, afin d'assurer la circulation de l'air de sèchage.

La photo développement séchée est ensuite réceptionnée dans un petit boîtier (152—25) prévu à cet effet, d'où on la retire à la main.

Le dispositif comporte en outre:

— une boîte classique de commande électrique, assurant notamment les fonctions suivantes:
  — la mise sous tension,
  — la commande du passe-vue (35) en vue par vue, c'est-à-dire au coup, ou au contraire en commande automatique, c'est-à-dire répétitive,
  — la commande de l'éclairage de la lampe d'exposition (1),
  — le règlage de la régulation (124) des bains;
— éventuellement un compteur à présélection.

Le dispositif de tirage et de développement simultané conforme à l'invention fonctionne de la manière suivante:

1 — Mise sous tension électrique,
2 — Régulation en température des bains de développement,
3 — Alimentation en papier sensible,
4 — Mise en place et cadrage du film négatif à reproduire dans le passe-vues,
5 — Règlage du filtre en fonction de la nature du film négatif,
6 — Choix du mode de fonctionnement (coup par coup ou automatique, donc répétitif),
7 — Déclenchement du cycle proprement dit, c'est-à-dire:
  — sèchage,
  — exposition, insolation,
  — avancement du papier,
  — coupe du papier insolé,
  — développement de cette feuille insolée.

Ce dispositif présente de nombreux avantages par rapport aux dispositifs commercialisés à ce jour. On peut citer:

— sa compacité et son coût modique;
— sa simplicité de mise en oeuvre et d'exploitation;
— la possibilité de changer rapidement et commédément, soit le papier sensible, soit les sous-ensembles passe-vues;
— l'accès facile aux bacs de développement;
— son adaptation facile aux formats usuels, par les sous-ensembles brochables;
— la possibilité de traiter indifféremment des photos couleur ou noir et blanc.

## Revendications

1. Dispositif automatique intégré pour le tirage et le développement simultanés de photographies, notamment de photographies en couleur, du type comprenant trois ensembles A, B, C, distincts, accolés:

— un premier ensemble A dit »d'exposition«, constitué par une lampe d'exposition proprement dite (1), un système filtrant soustractif (2), un cadre (4) destiné à recevoir le film à reproduire, un objectif d'agrandissement (5) et un diaphragme (6),
— un deuxième ensemble B en chambre noire, comprenant l'organe d'alimentation (10—11) du papier sensible (12), un organe d'avancement (14—15) dudit papier (12), un plan (16) où se projette sur le papier l'image à reproduire issue de l'objectif (5), un ciseau (17),
— un troisième ensemble C dit »de développement«, comprenant:
  — des moyens d'amenée (18—20) de la feuille de papier insolée découpée (19),
  — une succession de bains de développement (21—22—23) et une section de sèchage (24),
  — et des moyens destinés à faire avancer la feuille insolée découpée (19) dans ces différentes sections de traitement (21—22—23) et dans la section de sèchage (24),

caractérisé en ce que l'ensemble B possède sur une face verticale (64) des moyens embrochables (65) que s'emboîtent de façon démontable sur des moyens embrochables (51) situés sur une extrémité de l'ensemble A, et possède sur sa face du dessous (18—103) des moyens s'adaptant de façon démontable avec des moyens (20, 111, 113) situés sur le dessus de l'ensemble C de façon à pouvoir détacher l'ensemble A ou l'ensemble B sans interrompre le processus de développement, ce qui permet de changer respectivement le format du film à reproduire (4, 35) ou l'organe d'alimentation du papier sensible.

2. Dispositif selon revendication 1 du type dans lequel l'organe d'avancement (14—15) du papier sensible (12) de l'ensemble B est formé par deux rouleaux débrayables (80—81) maintenus en pression par un ressort (83) et dont la périphérie correspond à la longueur de papier (12) à débiter, lesdits rouleaux (80—81) étant commandés par un moteur (90) qui commande également le ciseau (17),

**0 064 015**

caractérisé en ce que le moteur (90) est un motoréducteur que, par une transmission à pignon (91):

— d'une part, commande en rotation un arbre (92) qui porte un manetton (93) parallèle à cet arbre, engrenant dans une croix de Malte (94) pependiculaire au manetton (93), ladite croix de Malte (94) étant solidaire d'un pignon (95) qui engrène sur un autre pignon (96) porté par l'arbre du rouleau-moteur de pression (80), de manière à débiter la longueur prédéterminée de papier sensible (12),
— d'autre part, par un galet (97), entraîne à son tour une fourchette (98) solidaire du couteau mobile (99) qui coopère avec le couteau fixe (100) placé à l'extrémité de la plaque d'appui (85), de manière à assurer la coupe du papier insolé (19).

3. Dispositif selon revendication 1, caractérisé en ce que l'ensemble en chambre noire B présente à sa jonction avec le premier ensemble d'exposition A un volet obturateur (60) pivotant autour d'un axe (61), destiné à assurer l'étanchéité à la lumière de ladite chambre noire lorsque l'on enlève l'ensemble A.

4. Dispositif selon revendication 1, caractérisé en ce que l'ensemble d'exposition A est formé de deux sous-ensembles embrochables l'un dans l'autre:

— le premier constitué par la lampe (1—31), le système filtrant (2—33), et un diffuseur (3) prolongé à son extrémité aval par des broches conductrices (34),
— le second constitué par le cadre (4) passe-vues (35), l'objectif d'agrandissement (5) et un diaphragme (6), traversé, longitudinalement, par un organe conducteur (51) formant côté amont, fiche femelle destinée à recevoir les broches (34) des premiers sous-ensembles et côté aval, broche mâle (51) destinée à venir s'emmancher sur l'ensemble (64) en chambre noire B.

5. Dispositif selon revendication 1, caractérisé en ce que l'ensemble en chambre noire B est constitué par:

— un premier boîtier (70) étanche à la lumière contenant la bobine (71) de papier sensible (72) qui sort par une fente étanche (13),
— un bâti (74) disposé sous le boîtier (70) présentant:
  — sur le dessus, des rebords (110) destinés à caler le boîtier (70) et une fente (73) coïncidant avec la fente (13) pour le passage du papier (72),
  — sur le dessous, un orifice (18) coïncidant avec un entonnoir (113—20) placé sur le dessus de l'ensemble horizontal de développement C pour le passage de la feuille de papier insolée (19) coupée,
  — sur le côté, en direction de l'ensemble d'exposition A, une protubérance en forme de nez (64) où viendra s'embrocher (51) l'ensemble d'exposition A et dans laquelle est placé le volet obturateur (60) pivotable (61).

6. Dispositif selon l'une des revendications 1 à 5, caractérisé en ce que l'ensemble en chambre noire B est solidaire du couvercle (111) articulé à une extrémité (112) du boitier (116) contenant l'ensemble de développement C.

**Patentansprüche**

1. Integrierte automatische Vorrichtung für das gleichzeitige Abziehen und Entwickeln von Photographien, insbesondere von Farbphotographien, mit drei unterschiedlichen, aneinandergebauten Einheiten A, B, C:

— einer ersten, sogenannten Belichtungs-Einheit A, die aus einer eigentlichen Belichtungslampe (1), einem Substraktivfiltersystem (2), einem Rahmen (4) zur Aufnahme des zu reproduzierenden Films, einer Vergrößerungslinse (5) und einer Blende (6) gebildet ist,
— einer zweiten Dunkelkammer-Einheit B, umfassend das Zufuhrorgan (10—11) für lichtempfindliches Papier (12), ein Vorschuborgan (14—15) für dieses Papier (12), eine Ebene (16), wo sich auf dem Papier das von der Linse (5) ausgehende zu reproduzierende Bild abbildet, einen Abschneider (17),
— einer dritten, sogenannten Entwicklungs-Einheit C, umfassend,
  — Zuführungsmittel (18—20) für das abgeschnittene belichtete Papierblatt (19),
  — eine Folge von Entwicklungsbädern (21—22—23) und einen Trocknungsbereich (24),
  — und Mittel, die dazu bestimmt sind, das abgeschnittene belichtete Blatt (19) in den verschiedenen Behandlungsbereichen (21—22—23) und in dem Trocknungsbereich (24) vorwärts zu bewegen,

dadurch gekennzeichnet, daß die Einheit B auf einer senkrechten Fläche (64) Einsteckmittel (65)

7

passen, die sich an einem Ende der Einheit A befinden, und auf seiner Unterseite (18—103) Mittel besitzt, die demontierbar mit Mitteln (20, 111, 113) zusammenpassen, die sich auf der Oberseite der Einheit C befinden, derart, daß die Einheit A oder die Einheit B ohne Unterbrechung des Entwicklungsprozesses abgenommen werden kann, was es ermöglicht, das Format des zu reproduzierenden Films (4, 35) beziehungsweise das Zufuhrorgan für das lichtempfindliche Papier zu wechseln.

2. Vorrichtung nach Anspruch 1, in der das Vorschuborgan (14—15) des lichtempfindlichen Papiers (12) der Einheit B durch zwei ausrückbare Walzen (80—81) gebildet ist, die durch eine Feder (83) unter Druck gehalten werden und deren Umfang der Länge des abzugebenden Papiers (12) entspricht, wobei die Walzen (80—81) von einem Motor (90) angetrieben sind, der gleichzeitig den Abschneider (17) antreibt, dadurch gekennzeichnet, daß der Motor (90) ein Getriebemotor ist, der über eine Kraftübertragung mit Ritzel (91):

— einerseits eine Welle (92) in Rotation versetzt, die einen zu dieser Welle parallelen Kurbelzapfen (93) trägt, der in ein senkrecht zum Kurbelzapfen (93) angeordnetes Malteserkreuz (94) eingreift, welches mit einem Zahnrad (95) fest verbunden ist, das in ein anderes, von der Welle der Antriebs-Andrückrolle (80) getragenes Zahnrad (96) eingreift, derart, daß die vorbestimmte Länge des lichtempfindlichen Papiers (12) abgegeben wird,
— andererseits über eine Rolle (97) eine Gabel (98) mitnimmt, die mit dem verschiebbaren Messer (99) fest verbunden ist, das mit dem feststehenden Messer (100) zusammenwirkt, das am Ende der Auflageplatte (85) angeordnet ist, derart daß das Abschneiden des belichteten Papiers (19) bewirkt wird.

3. Vorrichtung nach Anspruch 1, dadurch gekennzeichnet, daß die Dunkelkammer-Einheit B an ihrer Verbindung mit der Belichtungs-Einheit A eine um eine Achse (61) schwenkbare Verschlußklappe (60) aufweist, die dazu bestimmt ist, die Lichtdichtheit der Dunkelkammer zu sichern, wenn die Einheit A abgenommen wird.

4. Vorrichtung nach Anspruch 1, dadurch gekennzeichnet, daß die Belichtungs-Einheit A aus zwei ineinandersteckbaren Untereinheiten gebildet ist, wobei

— die erste aus der Lampe (1—31), dem Filtersystem (2—33) und einem an seinem hinteren Ende durch Führungsstifte (34) verlängerten Diffusor (3) besteht,
— die zweite, aus dem Rahmen (4), Transportschaltungen (35), der Vergrößerungslinse (5) und einer Blende (6) besteht und von einem Führungsorgan (51) in Längsrichtung durchsetzt ist, das an seiner Vorderseite Steckbuchsen zur Aufnahme der Stifte (34) der ersten Untereinheit aufweist und an seiner hinteren Seite den Steckstift (51) zum Einstecken in die Vorrichtung (64) in der Dunkelkammer-Einheit B.

5. Vorrichtung nach Anspruch 1, dadurch gekennzeichnet, daß die Dunkelkammer-Einheit B gebildet ist aus

— einem ersten lichtdichten Gehäuse (70), das die Rolle (71) mit lichtempfindlichen Papier (12) enthält, welches durch einen dichten Schlitz (13) austritt,
— einem Gestell (74), das unter dem Gehäuse (70) angeordnet ist und das aufweist:
  — im Oberteil Wandleisten (110) zum Festklemmen des Gehäuses (70) und einen Schlitz (73), der mit dem Schlitz (13) für den Durchgang des Papiers (72) deckungsgleich ist,
  — im Unterteil eine Öffnung (18), die mit einem Trichter (113—20) deckungsgleich ist, welcher im Oberteil der horizontalen Entwicklungs-Einheit C für den Durchgang des abgeschnittenen belichteten Papierblattes (19) angeordnet ist,
  — an der Seite zur Belichtungs-Einheit A einen nasenförmigen Vorsprung (64), wo die Belichtungs-Einheit A eingesteckt wird und in der die Verschlußklappe (60) um die Achse (61) schwenkbar angeordnet ist.

6. Vorrichtung nach einem der Ansprüche 1 bis 5, dadurch gekennzeichnet, daß die Dunkelkammer-Einheit B fest verbunden ist mit der Abdeckung (111), die an einem Ende (112) des die Entwicklungs-Einheit C enthaltenden Gehäuses (116) angelenkt ist.

## Claims

1. Integrated automatic device for the simultaneous printing and development of photographs, particularly color photographs, comprising three separate units A, B, C adjoined each together:

— a first unit A said »exposure unit« comprising an exposure lamp (1), a substractive filtering system (2), a frame (4) intended to receive the film to be reproduced, an enlargement lens (5) and a shutter (6);

- a second dark-room unit B comprising means for feeding (10—11) sensitive paper, means for advancing (14—15) the said paper (12), a planar surface (16) on which the image to be reproduced transmitted from the said lens (5) is projected onto the paper, a cutter (17);
- a third development unit C comprising:
  - means for feeding (18—20) the cut exposed sheet of paper (19),
  - a series of development baths (21, 22, 23) of processing sections and a drying section (24),
  - and means intended to advance the cut exposed sheet (19) through said processing sections (21, 22, 23) and through said drying section (24),

characterized by the fact that the unit B comprises, on its vertical surface (64) pluggeable means (65) which fit with pluggeable means (51) located at one end of the exposure unit A and owns, on its below surface (18—103) means adapted to be plugged with means (20, 111, 113) located on the top of the unit C in order to separate unit A or unit B without interrupting the developing processing, that allows to modify respectively the size of the negative film to be reproduced (4, 35) or the feeding menber for sensitive paper.

2. Device according to claim 1 in which the means for advancing (14, 15) the paper (12) of the dark-room unit B comprises two rollers (80—81) hold under pressure by a spring (83), the periphery of the said rollers corresponding to the length of the paper (12) to be fed, the said rollers (80—81) being driven by a motor (90) which also drives the cutter (17), characterized by the fact that the motor (90) is a motor reducer which through a pinion transmission (91):

- at a first side, rotatably drives a shaft comprises a crank pin (93) parallel to said shaft, engaging into a Maltese cross-shaped element (94) perpendicular to the said crank pin (93), the said Maltese cross-shaped element (94) being connected with a pinion (95) which meshes with another pinion (96) borne by pressure drives roller shaft (80), so as to feed the predetermined length of sensitive paper (12);
- at a second side, drives through a roller (97) which in its turn drives a fork (98) connected to the movable blade (99) which cooperates with the fixed blade (100) located at the end of the resting plate (85) to assure the cutting of the exposed paper (19).

3. Device according to claim 1, characterized by the fact that the dark-room unit B comprises, at its junction with the first exposure unit A, a shutter (60) pivotable around an axis (61), adapted to assure the imperviousness to ligth of the said dark-room unit when the exposure unit A is removed.

4. Device according to claim 1, characterized by the fact that the exposure unit A comprises two sub-units which can be plugged one into the other:

- the first sub-unit comprising the lamp (1—31), the substractive filtering system (2—33) and a diffuser (3) which is extended by conductive pins (34) to its downstream end,
- the second sub-unit comprising the view-carrier (35) frame (4), the enlargment lens (5) and a shutter (6), traversed longitudinally by a conductive member (51) forming, in up-stream direction, jack adapted to receive the pins (34) of the first sub-unit and, in down-stream direction, male pins (51) adapted to fit with the dark-room (64) unit B.

5. Device according to claim 1, characterized by the fact that the dark-room unit B comprises:

- a first housing (70) light impervious comprising the roll (71) of sensitiver paper (72) which emerges through an impervious slit (13),
- a frame (74) arranged below the housing (70) comprising:
  - on the top, rims (110) intended to wedge the housing (70) and a slit (73) which coincides with the slit (13) for the passage of the paper (72),
  - on the bottom, an orifice (18) coinciding with a funnel (113—20) located on the top of the horizontal developing unit C for the passage of the cut exposed sheet of paper (19),
  - on a side, in the direction of the exposure unit A, a nose-shaped protuberance (64) in which the exposure unit A is fitted and in which is located the pivotable (61) shutter (60).

6. Device according to any claims 1 to 5, characterized by the fact that the dark-room unit B is connected with the cover (111) hinged to one end (112) of the housing (116) comprising the development unit C.

FIG.1

**FIG. 2**

FIG.3

FIG.4

**FIG.5**

F I G. 6